# EUROPÄISCHE PATENTSCHRIFT

(11) **EP 0 754 519 B1**
(45) Veröffentlichungstag und Bekanntmachung des Hinweises auf die Patenterteilung: **02.06.1999**
(21) Anmeldenummer: 95111510.4
(22) Anmeldetag: 21.07.1995
(51) Int. Cl.: B23K 31/02, B23K 26/06, B23K 26/00, B23K 26/08, B23D 65/00

(54) **Verfahren zur Herstellung eines Rotationswerkzeuges zur spanabhebenden Bearbeitung und das Werkzeug**
Method of making a rotary tool for operation with reward of swarf
Méthode de fabrication d'un outil tournant pour usinage par enlèvement de copeaux

(43) Veröffentlichungstag der Anmeldung: 22.01.1997
(73) Patentinhaber: Ledermann GmbH, 72160 Horb (DE)
(72) Erfinder: Rudlaff, Thomas, Dr.-Ing., D-70619 Stuttgart (DE); Haag, Matthias, Dipl.-Ing., D-70199 Stuttgart (DE); Gittel, Hans-Jürgen, Dr.-Ing., D-72108 Rottenburg (DE); Schmitt, Volker, Dipl.-Ing., D-72280 Dornstetten (DE)
(74) Vertreter: Riedel, Peter, Dipl.-Ing.

(56) Entgegenhaltungen:
- EP-A- 0 340 191
- DE-A- 3 434 714
- US-A- 4 188 524
- US-A- 4 223 202

## Beschreibung

Die Erfindung bezieht sich auf ein Verfahren zur Herstellung eines Werkzeuges zur spanabhebenden Bearbeitung, der im Oberbegriff des Anspruchs 1 angegebenen Gattung,

Bei diesen Werkzeugen handelt es sich vorzugsweise um Kreissägeblätter oder dgl., die mit Schnittgeschwindigkeiten bis über 120 m/s, zur spanabhebenden Bearbeitung Holz- und Holzwerkstoffen eingesetzt werden. Hierbei werden Schneidlinge verwendet, die eine definierte Schneidengeometrie aufweisen und stoffschlüssig mit einem Grundkörper verbunden sind.
Dadurch, daß die Schneidkante, der Angriffspunkt für die Zerspankräfte des Schneidlings auf einem größeren Radius als die Verbindungsfläche von Grundkörper und Schneidling liegt, treten Biegemomente auf, deren Kräfte nahezu rechtwinklig zur Verbindungsfläche liegen und von der stoffschlüssigen Verbindung aufgenommen werden müssen. Zusätzlich zu diesen Biegemomenten entstehen durch die Rotationsbewegung des Kreissägeblattes Fliehkräfte die als Schubkräfte auf die stoffschlüssige Verbindung wirken.
Um die Verformung des Grundkörpers, die aus den Fliehkräften und der Erhitzung des Werkzeuges während des Betriebes resultieren, zu minimieren, werden sogenannte Spannungsringe, auf mechanischem oder thermischem Wege, eingebracht. Etwaige im Grundkörper undefiniert vorhandene Eigenspannungen wirken sich, vorwiegend im Betriebszustand, negativ aus und verschlechtern die Planlaufgenauigkeiten des Werkzeuges.

Es sind Kreissägeblätter, bestehend aus einem Grundkörper und Hartmetallzähnen, die eine definierte Schneidengeometrie aufweisen, zur Holz- und Kunststoffbearbeitung bei Schnittgeschwindigkeiten bis 100 m/s, bekannt.
Hierbei werden die Zähne, die eine hitzempfindliche Diamantdeckschicht haben können, mit dem Grundkörper durch ein Lötverfahren stoffschlüssig verbunden. Damit die hitzeempfindliche Deckschicht nicht zerstört wird, muß hier ein Lot eingesetzt werden, welches eine niedrige Schmelztemperatur aufweist. Die Festigkeit des Lotes und somit der Lötverbindung ist bei den Temperaturen, die bei der Benutzung des Werkzeuges auftreten können, entsprechend gering.
Bei dem in der Regel angewandeten Lötverfahren handelt es sich um ein Induktionsverfahren. Hier bei wird der Grundkörper und das Lot mittels Induktionsspulen auf Löttemperatur erhitzt. Der Erwärmungsvorgang erfolgt relativ langsam, sodaß ein Teil der Wärmemenge in den üblicherweise gehärteten oder vergüteten Grundkörper abgeleitet wird und dort zu unkontrollierbaren Spannungen führt.

Desweiteren sind Trennschleifscheiben zur Gesteinsbearbeitung, die mit einer maximalen Schnittgeschwindigkeit von 85 m/s betrieben werden, bekannt. Diese Trennschleifscheiben bestehen aus einem Stahlgrundkörper und diamanthaltigen Schleifsegmenten. Dabei haben die Schleifegmente üblicherweise eine Höhe von maximal 9 mm bei einer Segmentlänge von meist mehr als 40 mm.
Die Trennsegmente setzen sich aus einem metallischen, diamantfreien Basiskörper und einer Deckschicht, in die Diamantkörner eingebettet sind, zusammen. Die Verbindung von Grundkörper und Schneidlingen erfolgt mittels einer einseitigen Laserstrahlschweißung.
Die Schweißung erfolgt dadurch, daß die Energiequelle eine definierte Bahn, z. B. entlang der Berührungsflächen von Trennsegment und Grundkörper, abfährt und in diesem, begrenzten Bereich zwischen den beiden Metallen eine Schweißverbindung erzeugt.

Die hierbei erzeugte Verbindungsfläche entspricht dem Produkt aus der Schweißnahtlänge und der Nuttiefe. Durch die große Segmentlänge kommt es im vorliegenden Fall zu einer großen Verbindungsfläche.
Eine hohe Festigkeit der Schweißverbindung ist daher nicht erforderlich zumal dann wenn, wie im vorliegenden Fall, ein schleifender Arbeitgang ausgeführt wird und somit primär Kräfte, in tangentialer Richtung, und keine Biegemomente auftreten.

Nachteilig ist bei diesen einseitigen Laserschweißverfahren, daß die der Laseroptik zugewandte Gundkörper- bzw. Schneidlingseite stark erwärmt wird und die abgewandte Seite relativ kalt bleibt. Dies führt zu thermischen Eigenspannungen, die zu einer Verformung des Grundkörpers oder bei größeren Differenzen im thermischen Ausdehnungskoeefizient der beiden zu verschweißenden Teile, wie dies z. B. zwischen Hartmetall und Stahl der Fall wäre, zu Rissen führen können. Desweiteren wirken sie der eingebrachten Werkzeugspannung entgegen, sodaß Werkzeuge für hohe Schnittgüteforderungen so nicht herstellbar sind. Beim einseitigen Schweißen entsteht immer eine ausgeprägte Einbrandkerbe, die während der Nutzung des Werkzeuges eine Sollbruchstelle darstellt.
Nachteilig ist ferner, daß die maximale Schweißnahttiefe, beim einseitigen Laserschweißen, bei etwa einem Millimeter liegt. Das bedeutet um hohe Kräfte aufnehmen zu können, müssen die Schweißnähte eine relativ große Länge aufweisen.

Die DE-A-34 34 714 beschreibt ein Kreissägeblatt mit mehreren Schneidelementen, bei dem der Hauptkörper des Kreissägeblattes aus Stahl besteht. Die Schneidelemente sind einzeln oder in Gruppen an Zwischenstücken befestigt, welche wiederum mit dem Hauptkörper stoffschlüssig verbunden sind. Ein solches Kreissägeblatt ist jedoch schwierig herzustellen, da zunächst die Schneidelemente an den Zwischenstücken ausgerichtet und dann mit diesen verbunden werden müssen und danach eine weitere Ausrichtung der Zwischenelemente an dem Hauptkörper mit anschließender stoff-. schlüssiger Verbindung notwendig ist. Durch diesen zweistufigen Herstellungsprozeß ist ein hoher Arbeitsaufwand erforderlich und zudem kann nicht ausgeschlossen werden, daß erhebliche Rund- und Planlauffehler auftreten. Solche Fehler müssen durch abschließenden Schneidenschliff ausgeglichen werden, was mit einer beachtlichen Materialabtragung verbunden ist. Selbst wenn eine gute Plan- und Rundlaufgenauigkeit am Schneidenflugkreis erreicht wird, so treten mit zunehmender Umfangsgeschwindigkeit Fluchtfehler zwischen dem Hauptkörper und den Zwischenstücken auf. Die Zwischenstücke werden in Ausnehmungen des Hauptkörpers mittels eines Laserstrahls eingeschweißt, wohingegen das Schneidelement an dem Zwischenstück durch konventionelle Lötung befestigt ist. Bei der Verlötung breitet sich die Wärme im Schneidezahn und im Zwischenstück aus, wodurch die Gefahr besteht, daß eine Versprödung und Rißbildung auftritt und bei Schneidezähnen mit polykristallinen Diamanten aufgrund der Wärmeempfindlichkeit eine Graphitierung eintritt.

Die EP-A-0 340 191 beschreibt ein Verfahren zur Verbindung von aus hartem Metall, insbesondere Titan, bestehenden Teilen einer Zahnprothese. Dabei werden in einem ersten Verfahrensschritt zwei passgenaue Kontaktflächen zueinander mit großer Genauigkeit justiert und gegenseitig über eine Verbindung befestigt. In einem zweiten Verfahrensschritt wird mit Hilfe einer Laserausrüstung die Verschweißung der aus Titan bestehenden Teile durchgeführt. Mit diesem Verfahren soll das Problem gelöst werden, die Titanteile in Zahnprothesen mit einer solch großen Genauigkeit zu verbinden, daß das Produkt mit Toleranzen von lediglich einem oder wenigen Hundertstel mm gefertigt wird.

Der Erfindung liegt die Aufgabe zugrunde, ein Verfahren zur Herstellung eines Werkzeuges zur spanabhebenden Bearbeitung des im Oberbegriff des Anspruchs 1 angegebenen Gattung zu schaffen, bei dem eine hochbelastbare Verbindung von Schneidling und Grundkörper erreicht ist, ohne hierbei das Gefüge von Grundkörper oder Schneidling negativ zu beeinflußen.

Die Aufgabe wird gemäß der Erfindung mit den Merkmalen des Anspruchs 1 gelöst.

Die Vorteile der Erfindung sind im wesentlichen in dem neuen stoffschlüssigen Verbindungsverfahren zu sehen. Durch den gleichzeitigen, zweiseitigen Bearbeitungsvorgang, mit aufeinander abgestimmter oder geregelter Strahlungsintensität und -gestalt, werden die negativen Einflüsse des bisher bekannten einseitigen Laserschweißens ausgeschlossen.
Das bedeutet, durch die gleichzeitige zweiseitige Erwärmung wird die gesamte Berührungsfläche gleichmäßig erwärmt. Es entsteht eine homogenere Schweißverbindung, wobei sich zusätzlich noch eine größere Schweißnahttiefe und eine größere Durchschweißdichte erreichen läßt, mit der Folge, daß sich die Festigkeit der Schweißverbindung erhöht.

Da bei Holzbearbeitungswerkzeugen größere Grundkörperdicken notwendig sind, werden lasergeschweißte Werkzeuge durch die größeren Schweißnahttiefen überhaupt erst möglich. Dadurch, daß zweiseitig erwärmt wird, treten keine asymmetrischen, thermischen Spannungen auf, die zu einer Verformung und damit zu schlechtem Planlauf mit negativem Einfluß auf die Schnittgüte führen könnten. Desweiteren wird es möglich auch die in der Holzbearbeitung üblichen spröden Hartmetallsorten mit sehr niedrigen thermischem Ausdehnungskoeffiziente zu verwenden.
Das gleichzeitige, zweiseitige Erwärmen birgt noch den weiteren Vorteil in sich, daß die Berührungsflächen des Grundkörpers und des Schneidlings schneller erwärmt werden und die eingetragene Gesamtwärmemenge gering ist. Es kommt zu keiner Strukturänderung in der Diamantdeckschicht des Schneidlinges, die zur Umwandlung des Diamantes in Graphit und damit zur Unbrauchbarkeit des Schneidlings führen kann.

Ein weiterer Vorteil ist, daß sich durch das gleichzeitig, beidseitige Schweißen und durch die Verwendung eines Schweißzusatzstoffes eine einbrandkerbenfreie und gleichmäßigere Nahtform erreichen läßt. Vorteilhaft ist desweiteren, daß sich durch das gleichzeitige, zweiseitige Schweißen die Bearbeitungszeit verringert. Dieser Vorteil gewinnt insbesondere dann an Gewicht, wenn man von einem üblichen Kreissägeblatt, mit z. B. 96 Zähnen, ausgeht und sich demzufolge die Fertigungszeit erheblich reduziert.
Fig. 1 zeigt ein Beispiel einer schematischen Anordnung einer erfindungsgemäßen Verfahrenseinrichtung.
Fig. 2 zeigt gegenüber der Fig. 1, eine um etwa 90° geschwenkte Anordnung der Laseroptiken (4, 4') einschließlich eines Beispieles einer Strahllenkeinrichtung (11,11') und die zu verbindenen Teile (7, 8).

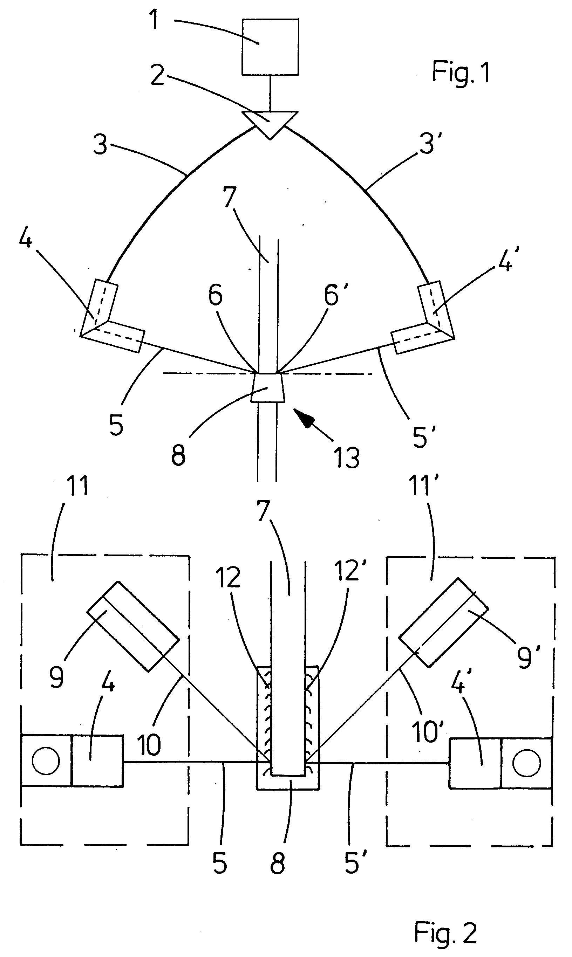

Die in Fig. 1 dargestellte Strahlenquelle (1) erzeugt ein Strahlenbündel, das durch eine Strahlteilungseinrichtung (2) in einem bestimmten Verhältnis geteilt und über die Strahlenlichtkabel (3, 3') den Strahlenoptiken (4, 4') zugeführt wird.
Die Strahlen (5, 5') werden von den Strahlenoptiken (4, 4') auf einen näher zu definierenden Punkt im Bereich der Nahtflächen (6, 6') zwischen dem Tragkörper (7) und dem Schneidling (8) geleitet.
Die von den Strahlen (5, 5') beaufschlagten Materialen an der Nahtfläche (6, 6') werden aufgeschmolzen und es entsteht eine stoffschlüssige Verbindung.

Die in Fig. 2 dargestellte Strahlenoptiken (4, 4') und in diesem Beispiel vorhandene Einheit (9, 9') zur Zuführung von Zusatzmaterial (10, 10') werden mittels einer Strahllenkeinrichtung (11, 11') derart verfahren, daß durch die Strahlen (5, 5') die gewünschten Verbindungsnähte (12, 12') erzeugt werden.
Alternativ hierzu, besteht auch die Möglichkeit, die Strahllenkeinrichtung (11, 11') unverändert in ihrer Lage zu belassen und stattdessen das Werkzeug (13) entsprechend zu bewegen.

## Patentansprüche

1. Verfahren zur Herstellung eines Rotationswerkzeuges zur spanabhebenden Bearbeitung, insbesondere Kreissägeblätter, Fräswerkzeuge oder dergleichen, deren Abmessungen in mindestens einer Dimension wesentlich größer ist als die in den anderen Dimensionen, und deren Schneidlinge (8) eine definierte Schneidengeometrie aufweisen und mit einem metallischen Trägerkörper (7) durch eine stoffschlüssige Verbindung, vorzugsweise durch Schweißen mit energiereichen Strahlen (5, 5'), verbunden sind,
dadurch gekennzeichnet, daß die energiereichen Strahlen (5, 5') von zwei Seiten gleichzeitig auf die Verbindungsnaht (12, 12') derart einwirken, daß eine gleichmäßige Erwärmung der gesamten Berührungsfläche des Tragkörpers (7) und des Schneidlings (8) erfolgt.

2. Verfahren nach Anspruch 1,
dadurch gekennzeichnet,
daß es sich bei den Strahlen (5, 5') um Laserstrahlen handelt.

3. Verfahren nach Anspruch 1,
dadurch gekennzeichnet,
daß ohne Zusatzmaterialen (10, 10') geschweißt wird.

4. Verfahren nach Anspruch 1,
dadurch gekennzeichnet,
daß mit Zusatzmaterialien (10, 10') geschweißt wird.

5. Verfahren nach Anspruch 1,
dadurch gekennzeichnet,
daß die Schneidlinge (8) aus Hartmetall bestehen.

6. Verfahren nach Anspruch 1,
dadurch gekennzeichnet,
daß die Schneidlinge (8) aus einem Hartmetallbasiskörper und einer Deckschicht aus polykristallinem Diamant bestehen.

7. Verfahren nach Anspruch 1,
dadurch gekennzeichnet,
daß mit zwei leistungsregelbaren Strahlenquellen (1) gearbeitet wird.

8. Verfahren nach Anspruch 1,
dadurch gekennzeichnet,
daß mit einer leistungsregelbaren Strahlenquelle (1) und einer Strahlteilungseinrichtung (2) operiert wird.

9. Verfahren nach Anspruch 7 oder 8,
dadurch gekennzeichnet,
daß die Strahllenkeinrichtungen (11, 11'), der zwei Strahlen (5, 5'), synchron zueinander bewegt werden.

10. Verfahren nach Ansprüche 7 und 8,
dadurch gekennzeichnet,
daß die Zuführung der Schneidlinge (8) automatisch erfolgt und auf dem Tragkörper (7) positioniert werden.

## Claims

1. A process for the manufacture of a rotation tool for cutting, in particular circular saw blades and shaping or similar tools, which have measurements which are significantly greater in at least one dimension than in the other dimensions, and with cutting parts (8) which have a definite cutting geometry and are connected to a metal supporting body (7) by means of a fusion connection, preferably by welding with high-energy beams (5, 5'),
characterised in that the high-energy beams act simultaneously upon the connecting seam (12, 12') from both sides in such a way that the entire contact surface of the supporting body (7) and the cutting part (8) is warmed evenly.

2. A process in accordance with Claim 1,
characterised in that
the beams (5, 5') are laser beams.

3. A process in accordance with Claim 1,
characterised in that
welding is carried out without welding filler (10, 10').

4. A process in accordance with Claim 1,
characterised in that
welding is carried out with welding filler (10, 10').

5. A process in accordance with Claim 1,
characterised in that
the cutting parts (8) are made of hard metal.

6. A process in accordance with Claim 1,
characterised in that
the cutting parts (8) comprise a hard metal body and an outer layer of polycrystalline diamond.

7. A process in accordance with Claim 1,
characterised in that
two variable-intensity beam sources (1) are used.

8. A process in accordance with Claim 1,
characterised in that
one variable-intensity beam source (1) and one beam guidance device (2) are used.

9. A process in accordance with Claim 7 or 8,
characterised in that
the beam guidance devices (11, 11') for the two beams (5, 5') are moved synchronously in relation to each other.

10. A process in accordance with Claims 7 and 8,
characterised in that
the cutting parts (8) are fed in and positioned on the supporting body (7) automatically.

## Revendications

1. Procédé pour la fabrication d'un outil rotatif d'usinage par enlèvement de copeaux, en particulier de lames de scie circulaire, d'outils de fraisage ou analogues, dont les cotes sont dans au moins une dimension substantiellement plus grandes que celles des autres dimensions, et dont les éléments de coupe (8) présentent une géométrie de coupe définie et sont reliés à un corps porteur métallique (7) par une liaison par soudage, de préférence par soudage avec des rayons à haute énergie (5, 5'),
caractérisé en ce que les rayons à haute énergie (5, 5') agissent simultanément par deux côtés sur la soudure de liaison (12, 12') de telle manière qu'il se produit un réchauffement homogène de l'ensemble de la surface de contact du corps porteur (7) et de l'élément de coupe (8).

2. Procédé selon la revendication 1, caractérisé en ce que les rayons (5, 5') sont des rayons laser.

3. Procédé selon la revendication 1, caractérisé en ce que le soudage est réalisé sans matières d'apport (10, 10').

4. Procédé selon la revendication 1, caractérisé en ce que le soudage est réalisé avec des matières d'apport (10, 10').

5. Procédé selon la revendication 1, caractérisé en ce que les éléments de coupe (8) sont en métal dur.

6. Procédé selon la revendication 1, caractérisé en ce que les éléments de coupe (8) sont composés d'un corps de base en métal dur et d'une couche de recouvrement en diamant polycristallin.

7. Procédé selon la revendication 1, caractérisé en ce que l'on travaille avec deux sources de rayonnement (1) à puissance réglable.

8. Procédé selon la revendication 1, caractérisé en ce que l'on opère avec une source de rayonnement (1) à puissance réglable et un dispositif de séparation de faisceau (2).

9. Procédé selon la revendication 7 ou 8, caractérisé en ce que les dispositifs de guidage de rayon (11, 11'), des deux rayons (5, 5'), sont déplacés de façon synchrone l'un par rapport à l'autre.

10. Procédé selon les revendications 7 et 8, caractérisé en ce que les éléments de coupe (8) sont avancés automatiquement et positionnés sur le corps porteur (7).
